(19)

Europäisches
Patentamt
European
Patent Office
Office européen
des brevets

(11) **EP 3 054 310 A1**

(12) **EUROPEAN PATENT APPLICATION**

(43) Date of publication:
**10.08.2016 Bulletin 2016/32**

(51) Int Cl.:
***G01S 5/00*** *(2006.01)*          ***G01S 5/02*** *(2006.01)*
***H04W 64/00*** *(2009.01)*          ***G01S 19/46*** *(2010.01)*

(21) Application number: **15382035.2**

(22) Date of filing: **03.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Vodafone IP Licensing Limited
The Connection
Newbury
Berkshire RG14 2FN (GB)**

(72) Inventors:
• **Domínguez Romero, Francisco
28042 Madrid (ES)**

• **Tenorio, Santiago
28042 Madrid (ES)**
• **Herrero, Pablo
28042 Madrid (ES)**
• **Rivas, Cristina
28042 Madrid (ES)**

(74) Representative: **Boult Wade Tennant
Verulam Gardens
70 Gray's Inn Road
London WC1X 8BT (GB)**

(54) **Method for location estimation of a mobile device**

(57)     A method for providing an indoor location of a mobile device, the mobile device having satellite navigation capabilities so that it is capable of reporting GNSS location information, the method comprising:
- upon detecting that the mobile device has stopped reporting its GNSS location information determining:
i) whether a signal level value obtained from the signal levels reported by the mobile device from the serving cell and neighbouring cells has decreased more than a predefined amount of decibels during a first time window since the last GNNS location information was reported; and,
ii) whether the last reported GNSS location information was less than a predefined distance from a building; and

- using the position coordinates of such building as the location of the mobile device when both conditions i) and ii) are met.

     The invention also refers to a method for providing an altitude estimation of a mobile device within a building, which comprises determining a variation in the altitude of the mobile device within the building upon detecting that one or more of a set of RF parameters reported by the mobile device has changed during a specified time window.

EP 3 054 310 A1

FIG. 1

**Description**

**TECHNICAL FIELD**

The present invention relates to wireless networks and, more specifically, to methods for improving the location determination of a mobile station located indoors in a cellular network.

**STATE OF THE ART**

Nowadays, there is an increasing need for having an approximate location of a mobile device within a cellular network, since many services offered to users are based on the location of the mobile device.
In order to calculate such an approximate location of the mobile device (also referred to in the present text as user equipment, UE, user, user device, mobile station, mobile terminal or access terminal), several methods use information available within the network to generate or estimate the approximate location of the mobile device.
Some locations systems are based on geometric techniques, which estimate the location of the mobile device by multilateration of radio signals between several base stations and the mobile device, or by triangulation of Time Of Arrival (TOA), Time Difference Of Arrival (TDOA), enhanced cell-ID or Uplink Time Difference Of Arrival (U-TDOA) measurements, or using the relationship between the received signal strength attenuation and the distance to base stations (RF propagation models).
Other location systems are satellite-based (GPS, stand-alone or assisted), but they are mainly employed for outdoor applications, having a limited application indoors.
The location estimation of the mobile device can be improved using database correlation methods or RF patterns matching methods: a database of location dependent parameters is constructed using RF measurements; afterwards, the location of a mobile device is estimated by comparing its own RF measurements with entries in the database. For instance, European patent application published EP2154546A2 describes a method for determining the location of a mobile station having no dedicated external positioning systems (e.g. GPS), by using devices having GPS to create a matrix of recorded network radio parameters linked to positioning coordinates. The position of the mobile station is then estimated comparing its measured network radio parameters of the mobile station to those recorded in the positioning matrix.
However, the problem of indoor location is not solved in this case because GPS is not available, and therefore, there are no GPS measurements corresponding to indoor locations in the positioning matrix.
Some solutions are able to determine that a mobile device is located indoors using additional equipment located within the buildings, such as beacons or other Wi-Fi devices, which detect the mobile device once it has entered the building. But they require such additional equipment.
Additionally, for providing an altitude estimation of a mobile device several solutions make use of altimeters or other pressure or motion sensors to provide such estimation.
Thus, there is a challenge to be able to locate mobile users indoors, where the satellite systems are no longer available, and also to be able to provide the altitude of the mobile user inside a building without having to include additional equipment in the network or in the mobile device.

**DESCRIPTION OF THE INVENTION**

It is therefore an object of the invention to provide a method for improving the location estimation of a mobile device by determining whether it is located indoors or not, and also by providing an altitude estimation of the mobile device within the building based on an analysis of the measurements reported by the mobile device.
A first aspect of the invention relates to a method for providing an indoor location of a mobile device, the mobile device having satellite navigation capabilities so that it is capable of reporting GNSS location information, the method comprising:

- upon detecting that the mobile device has stopped reporting its GNSS location information determining:

  i) whether a signal level value obtained from the signal levels reported by the mobile device from the serving cell and neighbouring cells has decreased more than a predefined amount during a first time window since the last GNNS location information was reported; and,
  ii) whether the last reported GNSS location information was less than a predefined distance from a building; and

- using the position coordinates of such building as the location of the mobile device when both conditions i) and ii) are met.

The invention further comprises monitoring radio measurement reports from the mobile devices. For example, these may include GNSS location information or track of the reported GNSS location information. This way, it can be detected when the mobile device stops reporting its GNSS location information (which can be representative of the UE having gone indoors). Then, certain RF parameters are analysed and the latest reported GNSS detailed location of the UE is checked to discern whether the UE is actually inside a building.

In the present text the term building includes any structure where no or limited GNSS signal is available for reception.

The signal level can be measured, for example, by any one of the following: Received Signal Code Power, RSCP; Reference Signal Received Power, RSRP; Received Signal Strength Indicator, RSSI, Received Signal Level, Rxlev . Preferably, the signal level value is obtained as a weighted mean of the signal levels of the serving cell and neighbouring cells, or any other equivalent measure of signal level.

The step of checking whether the last reported GNSS location information was less than a predefined distance from a building can be carried out using a map matching technique, which associates a user position to a road/street network on a digital map. Preferably, if the reported GNSS location information is less than a predefined distance from more than one building, the location determination of the mobile device is the position coordinates of the closest building.

The method of the invention preferably further comprises the step of storing the position coordinates of the building where the UE has been estimated to be located, so as to keep historic data of the locations of all the mobile devices of the network. The position coordinates are stored in the database preferably paired to any RF parameters reported by the mobile device taken in such position coordinates. Such database can be used for further improving the location estimation of a UE in a correlation-type method, such as the one described in patent application published EP-2154546-A1 by the same applicant.

The invention preferably further comprises a verification step in which it is further confirmed that the mobile device is indoors if the time delays between the mobile device and each base station has not changed more than a predefined percentage during the first time window since the last GNSS location information was reported. With this additional verification false indoor detections are prevented.

In a preferred embodiment, an estimation of which side of the building where the mobile device is located within the building is provided, by determining at which side of the building are the neighbouring cells whose received signal level is the strongest. That is, by further checking from which side of the building are the strongest signals coming, it can be determined at which side of the building the UE is most likely to be located.

Another aspect of the invention relates to a network entity belonging to a mobile operator network, the network entity comprising:

- analysis means configured for detecting that the mobile device has stopped reporting its GNSS location information; and upon such detection, checking:

  i) whether a signal level value obtained from the signal levels reported by the mobile device from the serving cell and from neighbouring cells has decreased more than a predefined amount during a first time window since the last GNSS location information was reported; and,
  ii) if the last reported GNSS location information was less than a predefined distance from a building; and

- means for using the position coordinates of such building as the location of the mobile device when both conditions i) and ii) are met.

The network entity is preferably an RNC or a BSC or an eNB; or an external server which obtains the RNC/BSC/eNB traces with all the signalling from the UEs.

A further aspect of the present invention relates to a method for providing an altitude estimation of a mobile device within a building. The method comprises determining a variation in the altitude of the mobile device within the building upon detecting that one or more of a set of RF parameters reported by the mobile device has changed during a specified time window.

So according to this aspect, the RF measurements reported by the mobile device and available in the network are additionally used to determine the altitude of the UE.

The RF measurement signals include any one or more of the following: signal level in terms of Received Signal Code Power, RSCP; Reference Signal Received Power, RSRP; Received Signal Strength Indicator, RSSI; Rxlev; signal to noise ratio, EcNo, Reference Signal Received Quality RSRQ; time difference of arrival, TDOA; round-trip time, RTT; carrier frequency.

In a preferred embodiment, the RF parameter used is the number of neighbouring cells reported by the mobile device, and the method determines a change in the altitude of the mobile device within the building when a variation in the number of reported neighbouring cells is outside a predetermined cell range. When the mobile device is located at a higher altitude usually more cells are visible, and the number of neighbouring cells reported by the mobile device increases; and vice versa. The predetermined cell range which determines that the variation in the number of cells is representative of an altitude change may depend on the structure of the building where the UE is located. In a preferred implementation, the predetermined cell range is made equal to two cells, so that when there is a decrease (or an increase) in the number of reported cells in more than two cells, it is determined that the altitude of the mobile device has moved down (or up, respectively) within the building.

In another preferred embodiment, the RF parameter used is the maximum distance to a neighbouring cell of the neighbouring cells reported by the mobile device, and the method further comprises determining that the altitude of the mobile device within the building has changed when a variation in the maximum distance to a neighbour cell is outside a predetermined distance range. When the mobile device goes up, it receives signals from cells which are farther away and were not visible when the mobile device was located at a lower position; and vice versa. The predetermined distance range which determines that the variation in the maximum distance to a cell is representative of an altitude change may also be dependent on the structure of the building where the mobile device is located. In a preferred implementation, the predetermined distance range is made equal to 25%, so that when the distance to the farthest reported cell decreases (or increases) more than 25%, it is determined that the altitude of the mobile device has moved down (or up, respectively) within the building.

In another preferred embodiment, the RF parameter used is a signal level value obtained from the serving and neighbouring cells (which can be measured in terms of any of RSCP, RSRP, RSSI or Rxlev), and the method further comprises determining that the altitude of the mobile device within the building has changed when a variation in the signal level value is outside a pre-determined signal level range. When the mobile device moves up in the building the signal level usually increases. The predetermined signal level range which determines that the variation in the maximum distance to a cell is representative of an altitude change may also be dependent on the structure of the building where the mobile device is located. In preferred implementations, the predetermined signal level range is made equal to 5 dB, 7dB or 20 dB.

In another preferred embodiment, the RF parameter used is a value of the signal-to-noise ratio obtained from the serving and neighbouring cells (which can be measured, for example, by means of the EcNo, or RSRQ), and the method further comprises determining that the altitude of the mobile device within the building has changed when a variation in the value of the signal-to-noise ratio is outside a pre-determined signal-to-noise ratio range. When the mobile device moves up in the building the signal-to-noise ratio usually decreases because at a higher altitude there are more cells and also more pollution. In preferred implementations, the predetermined signal-to-noise ratio range is made equal to 1 dB, 3dB, 5 dB, or 7dB.

In another preferred embodiment, the RF parameter used is the carrier frequency (for example, by means of the UARFCN, UTRA Absolute Radio Frequency Channel Number), and the method further comprises providing an altitude estimation of the mobile device within the building when it is detected that the carrier frequency used by the mobile device is not within a highest priority frequency band (that is, the mobile device is camping on a cell with a frequency band which is not the frequency band having the highest priority), and a signal level value obtained from the serving and neighbouring cells is within certain pre-established values (which signal level value can be measured in terms of any of RSCP, RSRP, RSSI or Rxlev). When the mobile device is using a carrier frequency which is not comprised in the highest priority frequency band to camp (the highest priority frequency band is usually the band of 2100 MHz because it has less coverage and higher capacity), and the signal level value reported by the mobile device is good (a good signal level value being considered, for example, when its value is equal to or above -90 dBm), the mobile device is estimated to be at one of the higher floors within the building, because at a higher altitude the highest priority frequency band is more polluted, which triggers a search for a cleaner frequency band having a lower priority for camping, but with a good signal level value. But if the mobile device is using a carrier frequency which is not comprised in the highest priority frequency band, and the signal level value reported by the mobile device is poor (a good signal level value being considered when its value is, for example, below 80 dBm), the mobile device is estimated to be at one of the lower floors within the building, because the lower frequency bands (e.g. 900 MHz band) has better indoor penetration coverage than the high frequency bands (e.g. 2100 MHz band).

In a preferred embodiment, when several RF parameters are monitored to provide an altitude estimation of the mobile device, the monitored RF parameters are assigned different priorities so that if they provide contradictory information on the altitude of the UE, the altitude estimation of the mobile device is provided by the RF parameter having the highest priority.

In another preferred embodiment, if several RF parameters are monitored and they provide contradictory information regarding the altitude of the UE, the altitude information is disregarded and no altitude determination of the mobile device is provided.

Still a further aspect of the invention is related to a network entity belonging to a mobile operator network, which comprises analysis means configured for:

- detecting that one or more of a set of RF parameters reported by a mobile device located within a building has changed during a certain time window; and,

- upon such detection, determining a change of altitude of the mobile device within the building.

The network entity is preferably an RNC or a BSC or an eNB, or an external server which obtains the RNC/BSC/eNB traces with all the signalling from the UEs.

The invention further refers to a computer program comprising computer program code means adapted to perform the steps of the method as previously defined, when said program is run on a computer, a digital signal processor, a field-programmable gate array, an application-specific integrated circuit, a micro-processor, a micro-controller, or any other form of programmable hardware.

The different aspects and embodiments of the invention defined in the foregoing can be combined with one another, as long as they are compatible with each other.

Additional advantages and features of the invention will become apparent from the detail description that follows and will be particularly pointed out in the appended claims.

BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a data flow illustrating the method for providing an indoor location of a mobile device according to an embodiment of the invention.

Figure 2 shows the average difference of the total received RSCP between outdoor and indoor points at the ground level of several buildings.

**DESCRIPTION OF A WAY OF CARRYING OUT THE INVENTION**

The following description is not to be taken in a limiting sense but is given solely for the purpose of describing the broad principles of the invention. Next embodiments of the invention will be described by way of example, with reference to the above-mentioned drawings.

The present invention is applicable to wireless networks, including but not limited to 3G and LTE wireless networks. The term "3G" refers to UMTS/WCDMA and includes, for example, HSDPA *(High Speed Downlink Packet Access)*, HSUPA *(High-Speed Uplink Packet Access)* and HSPA+.

In order to solve the existing problem of being unable to determine that the UE is actually located indoors due to the absence of GNSS/GPS signals, the present invention provides a method for determining that the UE is indoors based on an analysis of the measurements reported by the UE.

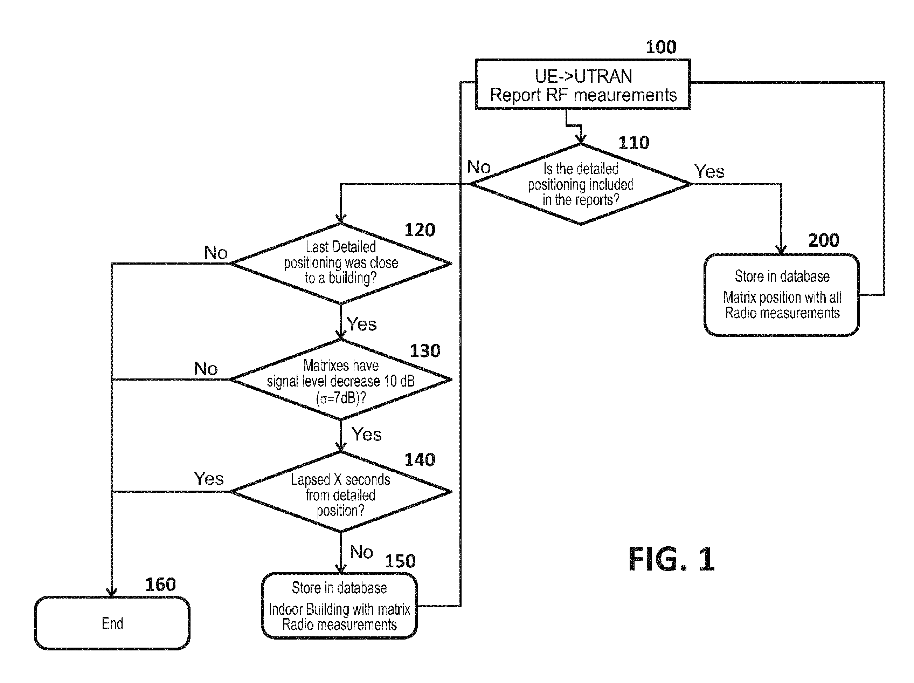

The mobile device to be located is registered with a mobile operator network. A network entity of the mobile operator network, for example, the Radio Network Controller (RNC), Base Station Controller (BSC) or enhanced node B (eNB) in the case of LTE, makes use of the functionality included in 3GPP Release-10 (the feature Minimisation of Drive-Tests, MDT) for automatically collecting measurements from the UE (box 100 in Figure 1).

These measurements from the mobile device or UE comprise: RF measurements and GNSS detailed location information, when available. By GNSS detailed location information it is meant any positioning information provided by a satellite navigation system, such as GPS, GLONASS, Galileo or Beidou system, usually reported in terms of longitude and latitude, and sometimes even altitude.

In 3GPP Release-10 it is possible to ask the UE in UMTS and LTE to report its GPS location information if available. This GPS location information can be sent if the RNC/eNB orders this in the Measurement Control message. In order to minimise battery consumption, the 3GPP specifies to report such GPS location information only when the UE is using the GPS for any other application at higher layers. Or the location of the mobile device can also be reported by the mobile device as part of 'Measure Position Response' which is sent by the UE in response to the Measure Position Request by the network (3GPP Release-10), and contains one of the five elements containing measurement data or location estimate (E-OTD Measurement Information, Location Information, GPS Measurement Information, GANSS Measurement Information or GANSS Location Information). 3GPP Release-11 further includes the possibility of asking the UE to report the location when measuring other RATs.

Additionally, the following information of the cell can also be included in the information reported from the UE to the RNC / eNB: cell-id and Scrambling Code for 3G or physical cell identifier (PCI) for 4G of every cell.

The different RF measurements are reported by the mobile device in measurement logs linked to a time stamp.

According to the present invention, the mobile devices which include their GNSS detailed location information in the measurement logs are tracked. By tracking the logs it is detected when the mobile device no longer reports the GNSS detailed location information (box 110 in Figure 1).

As an additional feature, the GNSS detailed location information of the UE as determined by the GPS paired with the corresponding RF measurements are stored in a database (box 200, Figure 1), which keeps record of the results of the location of the users.

If the GNSS detailed location information is no longer reported, it can be due to the following reasons:

- The user of the mobile device has stopped the GPS activation, for example, by closing a specific application which used the GNSS capabilities.
- The UE has lost the GPS/GNSS signal because it has gone indoors, for example, by entering inside a building, and the GPS signal is no longer available due to blind satellite vision. It is a fact that buildings not only reflect radio signals, they also absorb them.

So once it has been detected that the mobile device is no longer reporting its GNSS detailed location information, the method of the invention determines whether the GNSS detailed location information is no longer reported because the mobile device has moved indoors.

In a preferred embodiment of the invention, the UE reports to the network entity, either periodically or when scheduled by the network, its measurement logs comprising: time information, RF measurements and GNSS detailed location information. The network entity is configured to receive those measurement logs from the UE and store them in a positioning matrix.

As an example, in the UTRAN case this positioning matrix includes, for each GNSS or GPS position coordinates, latitude and longitude, information about all neighbours cells (one per row): cell1, cell2, ... celln. And for each cell, the RF measurements reported by the UE (as per 3GPP 25.331):

- Received Signal Code Power, RSCP, representing the signal level or strength;
- EcNo: signal to noise ratio;
- Time difference of arrival, TDOA, or the Round-Trip delay Time, RTT, representing the time delay between the UE and the base station.

The following is an example of a possible entry in the positioning matrix:

$$\text{GPS}_{\text{lat, long}}=\begin{pmatrix} cell1 & RSCP = -100dBm & EcNo = -5dB & RTT = 200\,ns & ... \\ cell2 & ... & ... & & \\ ... & & & & \\ celln & ... & ... & & \end{pmatrix}$$

The corresponding RF measurements are reported by the mobile device in 4G as specified in TS 36.331.

Other RF parameters can also be included in the positioning matrix, such as the variance of the measurements, which can be afterwards used as a further filtering parameter in determining that the UE is located indoors.

Then, according to the invention, the network entity detects when the UE measurement logs no longer include the GPS location information.

In order to identify whether the GPS signal is not available because the UE is located indoors, once the network entity has detected that the UE is no longer reporting its GPS location information, the RF measurements as reported by the UE - and stored in the positioning matrix - are analysed. In particular, a first condition is checked by determining whether the most recent detailed GPS location reported by the UE was close to a building (box 120, Figure 1). By close it is meant less than a predefined distance from the building, which distance depends on the scenario. For example, in an urban scenario a distance of less than 50 m is considered to be close to a building.

This first condition can be checked using any known map matching technique.

A second condition is checked by analysing the signal level (for example, in terms of RSCP) of the serving and neighbouring cells (box 130, Figure 1) during a certain time window since the last GPS location was reported by the UE (box 140, Figure 1). In particular, it is checked whether it has decreased, in average, by a certain predefined amount of decibels, for example, 5 to 10 dB. In order to avoid measurements which are too dispersed, a standard deviation of, for example, 6-7 dB, is also taken into account. The duration of the time window can be, for example, around 5 to 10 seconds.

In a real case, field measurements were taken in nine different buildings in Madrid. Measurements were taken in each building at several points located outside the building and also at several points inside the building, both at the ground level.

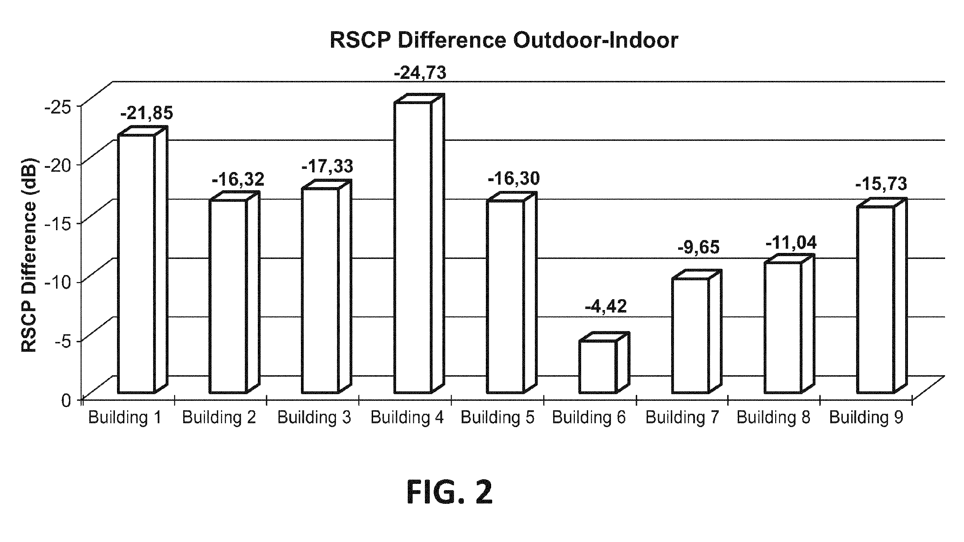

Figure 2 shows the average difference of the total received RSCP between the outdoor and the indoor points measured at the ground level of the nine buildings. As can be appreciated from these real case measurements, there is a noticeable decrease in the received signal level between the outdoor and the indoor scenarios, which is indicative that the UE has moved inside a building.

The order of checking the first and second condition is not relevant, and either condition can be checked prior to the other. When both the first and second conditions are met, the method of the invention determines that the UE is indoors (box 150, Figure 1), and set the coordinates of the building as the indoor location of the UE. Otherwise an indoor positioning of the UE is not established (box 160, Figure 1).

The position coordinates of the building where the mobile device has been located by the method of the invention, matched to the corresponding RF measurements are also stored in a database, which keeps record of the results of the location of the users.

If the reported GNSS location information is less than a predefined distance from more than one building, the location of the mobile device is determined as the position coordinates of the building which is closest to the reported GNSS location information.

Additionally, and in order to avoid false indoor detections in some situations - such as a UE entering in a car, therefore having some dB of decrease in the RF signal and stopping the application using the GNSS location - the method of the invention further checks if an RF measurement representative of the time delay between the mobile device and each base station has not changed more than a predefined value during the first time window since the last GNSS location information was reported.

The RF measurement representative of the time delay can be the RTT, the round trip time, which is the time delay between the UE and the base station or the eNodeB multiplied by two to consider both the uplink and the downlink transmission. The RF measurement representative of the time delay can also be the U-TDOA, Uplink Time Difference of Arrival, which just considers one-way (in this case the uplink) between the UE and the base station or eNodeB, or any other equivalent measure of time delay.

In the invention, the preferable predefined value is 500 ns for the RTT and 250 ns for the U-TDOA. If the time delay is above those values, that implies that the position of the UE has changed too much (there can be a distance variation of about 150 m), which probably means that the UE is travelling in a car or in some sort of transport. In such case, this time delay parameter is indicating that UE is not indoors even if the other conditions are met, so in this case the UE is not determined as being indoors. By including this further check a false positive detection of the mobile being indoors is prevented....

A further evidence for confirming that the UE is located indoors is to verify that the number and/or identification of the neighbouring cells reported by the mobile device has not significantly changed since the last GNSS location information was reported, for example, by checking, that the set of neighbouring cells is maintained, for example, more than 60% of the neighbouring cells being the same during a specific time period. As with the time delay, this change in the information related to neighbouring cells is indicating that UE is not indoors even if the other conditions are met, so in this case the UE is not determined as being indoors. By including this further check a false positive detection of the mobile being indoors is prevented.

According a further aspect of the present invention, it is also possible to provide an estimation of the altitude of a mobile device within a building as follows:

The mobile device or UE is registered with a mobile operator network. A network entity thereof - RNC, BSC, eNB, or the external server - collects the measurements reported by the UE. Such measurements are stored in a positioning matrix like the one previously described.

Once it has been determined that the UE is located inside a building, the RF measurements reported by the UE and stored in the positioning matrix are analysed so as to determine the altitude of the UE in the building.

For determining that the UE is located inside a building, the method previously described can be used, or other methods which make use of additional equipment located within the building - such as a beacon or by WiFi -, or in the UE itself - such as an altimeter or a barometer.

A variation of the altitude of the mobile device in the building can be determined when a pre-established variation in one or more of the RF parameters reported by the mobile device is detected during a specified time window.

The pre-established variation can be dependent on the structure of the building where the UE is located; for instance, it may be impossible to detect the variation of some of the RF parameters in a tall building which is surrounded by taller buildings; or the conditions can turn very favourable for RF reception if the building has a terrace (not necessarily located in the highest floor).

A variation in one or more RF parameters can be indicative of a change in altitude, for example:

- The number of neighbouring cells reported by the mobile device increases (or decreases) above a specific threshold value, which threshold value may depend on the building. For example, if there is an increase of more than two cells in the measurement logs reported by the UE, a variation of at least one floor up (between 3 to 5 metres) can be estimated in the altitude of the UE. In buildings having high ceilings (more than 5 metres), this threshold value of the number of cells can be three cells. The fact is that when the UE is located at a higher altitude more cells are visible, so they will be included in the measurements logs, regardless of their signal level being strong or low.

- The maximum distance to the cells reported by the mobile device increases above a certain threshold distance. For example, if the measurement logs includes cells which maximum distance to the UE has increased more than 25%, a variation of at least one floor up (between 3 to 5 meters) can be estimated in the altitude of the UE. This is due to the fact that as the UE goes up, it receives signals from cells which are farther and were not visible when the UE was located at a lower position.

- Also, an increase in the signal level, for example in terms of the average RSCP of the serving and neighbouring cells reported by the UE above a specific amount of decibels is indicative of the UE going up in the building. Depending on the building, the difference in decibels in average from the ground to the top floor can be of 5 dB, or 7dB or even 20 dB. In this case the increase (or decrease) can be very slow so it is preferably to include filters to enable a clean detection of the change.

- On the other hand, if the signal to noise ratio reported in terms of Ec/No from the serving and neighbouring cells decreases, around 1 to 3 dB less (or 5 to 7 dB in certain cases) from the ground to the top floor, it can be estimated that the UE has gone up. This is due to the fact that at a higher altitude there are more cells and also more pollution.

- An additional RF parameter that is monitored is the carrier frequency of the cells, which can be combined with other RF parameters, such as the RSCP, to detect an altitude variation or provide an altitude estimation of the UE. For example, if the carrier is in the 900 MHz range and the received RSCP is good (i.e., its value being equal to or above -90 dBm), for example, of -80 dBm, the UE is estimated to be at one of the higher floors within the building as there was a low EcNo triggering the search of a cleaner frequency. On the other hand, if the carrier is in the band of 900 MHz and the received RSCP is poor (i.e., having a value below -90 dBm), for example -100 dBm, the UE is estimated to be at one of the lower floors within the building because the 900 MHz band has better indoor penetration than the 2100 MHz band.

Thus, in a preferred embodiment, one or more of the RF parameters indicated above can be monitored to provide an altitude estimation of the mobile device.

If several RF parameters are monitored and they provide contradictory information on the altitude of the UE, the different monitored RF parameters can be assigned different priorities so that if they provide contradictory information on the altitude of the UE, the altitude estimation of the mobile device is provided by the RF parameter having the highest priority. Alternatively, it is also possible to disregard the contradictory altitude information and provide no altitude determination of the mobile device.

As with the method for determining that the UE is located indoors, the location estimation of the UE as determined by the method paired with the corresponding RF measurements are stored in a database, which keeps record of the results of the location of the users.

The methods described in the present invention can be implemented inside the radio network, for example in an RNC in case of 3G and in an eNB in case of LTE, or outside the radio network with a direct connection to extract the measurement reports from the RNC or eNB.

Similarly, the databases used in the present invention can be kept either at the network entity itself (RNC, BSC or e-node B) or in a separate entity, such as a server having an interface connection with the network entity itself.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

In this text, the term "comprises" and its derivations (such as "comprising", etc.) should not be understood in an excluding or limiting sense (such as "consists of"), that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

**Claims**

1. A method for providing an indoor location of a mobile device, the mobile device having satellite navigation capabilities so that it is capable of reporting GNSS location information, **characterized in that** the method comprises:

   - upon detecting that the mobile device has stopped reporting its GNSS location information determining:

      i) whether a signal level value obtained from the signal levels reported by the mobile device from the serving cell and neighbouring cells has decreased more than a predefined amount during a first time window since the last GNNS location information was reported; and,
      ii) whether the last reported GNSS location information was less than a predefined distance from a building; and

   - using the position coordinates of such building as the location of the mobile device when both conditions i) and ii) are met.

2. The method of claim 1, wherein the signal level value is obtained as a weighted mean of the signal levels of the serving cell and neighbouring cells.

3. The method of any of claims 1-2, wherein condition ii) is carried out using a map matching technique.

4. The method of any of claims 1-3, further comprising the step of storing the position coordinates of the building associated to any RF parameters reported by the mobile device taken in such position coordinates.

5. The method of any of claims 1-4, which further comprises a verification step in which it is further confirmed that the mobile device is indoors if the time delays between the mobile device and each base station has not changed more than a predefined percentage during the first time window since the last GNSS location information was reported.

6. The method of any of claims 1-5, which further comprises providing an estimation of which side of the building the mobile device is located within the building by determining at which side of the building are the neighbouring cells whose received signal level is the strongest.

7. A network entity belonging to a mobile operator network, **characterized in that** it comprises:

   - analysis means configured for detecting that the mobile device has stopped reporting its GNSS location information; and upon such detection, checking:

      i) whether a signal level value obtained from the signal levels reported by the mobile device from the serving cell and from neighbouring cells has decreased more than a predefined amount during a first time window since the last GNSS location information was reported; and,
      ii) if the last reported GNSS location information was less than a predefined distance from a building; and

   - means for using the position coordinates of such building as the location of the mobile device when both conditions i) and ii) are met.

8. A method for providing an altitude estimation of a mobile device within a building, **characterised in that** the method comprises determining a variation in the altitude of the mobile device within the building upon detecting that one or more of a set of RF parameters reported by the mobile device has changed during a specified time window.

9. The method of claim 8, wherein the one or more of the set of RF parameters is the number of neighbouring cells reported by the mobile device, and the method further comprises determining that the altitude of the mobile device within the building has changed when a variation in the number of reported neighbouring cells is outside a predetermined cell range.

10. The method of any of claims 8-9, wherein the one or more of the set of RF parameters is the maximum distance to a neighbouring cell of the neighbouring cells reported by the mobile device, and the method further comprises determining that the altitude of the mobile device within the building has changed when a variation in the maximum distance to a neighbour cell is outside a predetermined distance range.

11. The method of any of claims 8-10, wherein the one or more of the set of RF parameters is a signal level value obtained from the serving and neighbouring cells, and the method further comprises determining that the altitude of the mobile device within the building has changed when a variation in the signal level value is outside a predetermined signal level range.

12. The method of any of claims 8-11, wherein the one or more of the set of RF parameters is a value of the signal to noise ratio obtained from the serving and neighbouring cells, and the method further comprises determining that the altitude of the mobile device within the building has changed when a variation in the value of the signal-to-noise ratio is outside a pre-determined signal-to-noise ratio range.

13. The method of any of claims 8-12, wherein the one or more of the set of RF parameters is the carrier frequency, and the method further comprises providing an altitude estimation of the mobile device within the building when it is detected that the carrier frequency used by the mobile device is not within a highest priority frequency band and a signal level value obtained from the serving and neighbouring cells is within certain pre-established values.

14. A network entity belonging to a mobile operator network, **characterized in that** it comprises analysis means configured for:

    - detecting that one or more of a set of RF parameters reported by a mobile device located within a building has changed during a certain time window; and,
    - upon such detection, determining a change of altitude of the mobile device within the building.

15. A computer program comprising computer program code means adapted to perform the steps of the method according to any claims from 1 to 6 or 8-13 when said program is run on a computer, a digital signal processor, a field-programmable gate array, an application-specific integrated circuit, a micro-processor, a micro-controller, or any other form of programmable hardware.

**100**
UE->UTRAN
Report RF meaurements

**110**
Is the detailed positioning included in the reports?

No → **120** Last Detailed positioning was close to a building?

Yes → **200** Store in database Matrix position with all Radio measurements

No → **120**

Yes → **130** Matrixes have signal level decrease 10 dB (σ=7dB)?

No →

Yes → **140** Lapsed X seconds from detailed position?

Yes →

No **150** Store in database Indoor Building with matrix Radio measurements

**160** End

**FIG. 1**

EP 3 054 310 A1

FIG. 2

Europäisches
Patentamt

European
Patent Office

Office européen
des brevets

# EUROPEAN SEARCH REPORT

Application Number

EP 15 38 2035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/328725 A1 (WUOTI TUOMAS [FI] ET AL) 12 December 2013 (2013-12-12) * paragraph [0022] - paragraph [0024]; figures 2,3; table 1 * | 1-7,15 | INV. G01S5/00 G01S5/02 H04W64/00 G01S19/46 |
| A | US 2013/190010 A1 (CHIOU TA-GANG [TW] ET AL) 25 July 2013 (2013-07-25) * paragraph [0077] * * paragraph [0099] - paragraph [0121] * | 1-7,15 | |
| A | EP 2 046 087 A1 (VODAFONE PLC [GB]) 8 April 2009 (2009-04-08) * paragraph [0032] - paragraph [0039]; figures 4,5 * | 1-7,15 | |
| A | US 2011/156952 A1 (BHATTACHARYA TARUN KUMAR [US] ET AL) 30 June 2011 (2011-06-30) * the whole document * | 1-7,15 | |
| A | US 8 532 676 B1 (EL-SALLABI HASSAN MOHAMED [US]) 10 September 2013 (2013-09-10) * the whole document * | 1-7,15 | TECHNICAL FIELDS SEARCHED (IPC) G01S H04W |
| A | CN 103 856 989 A (CHINA TELECOM CORP LTD) 11 June 2014 (2014-06-11) * paragraph [0057] - paragraph [0059] * | 1-7,15 | |
| X | WO 2005/003809 A1 (TELECOM ITALIA SPA [IT]; BOIERO GIANLUCA [IT]; CAVALLO DAVIDE [IT]) 13 January 2005 (2005-01-13) * page 5, line 1 - page 20, line 3; figures 1-5 * | 8-15 | |
| X | US 8 412 204 B1 (OROSKAR SIDDHARTH S [US] ET AL) 2 April 2013 (2013-04-02) * column 2, line 8 - column 9, line 30; figures 1-6 * | 8,11,12, 14,15 | |

-/--

The present search report has been drawn up for all claims

| Place of search | Date of completion of the search | Examiner |
|---|---|---|
| Berlin | 12 October 2015 | Eraso Helguera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 38 2035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 999 780 B1 (ZHAO WEI [US]) 14 February 2006 (2006-02-14) * column 5, line 35 - line 45 * ----- | 8-15 | |
| A | WO 99/57575 A2 (SNAPTRACK INC [US]) 11 November 1999 (1999-11-11) * the whole document * ----- | 8-15 | |

TECHNICAL FIELDS
SEARCHED      (IPC)

The present search report has been drawn up for all claims

| Place of search | Date of completion of the search | Examiner |
|---|---|---|
| Berlin | 12 October 2015 | Eraso Helguera, J |

EPO FORM 1503 03.82 (P04C01)

Europäisches
Patentamt

European
Patent Office

Office européen
des brevets

**Application Number**

EP 15 38 2035

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 38 2035

The Search Division considers that the present European patent application does not comply with the requirements of unity of invention and relates to several inventions or groups of inventions, namely:

1. claims: 1-7(completely); 15(partially)

   Method, network entity and computer program for providing an indoor location of a mobile device.
   ---

2. claims: 8-14(completely); 15(partially)

   Method, network entity and computer program for providing an altitude estimation of a mobile device.
   ---

**ANNEX TO THE EUROPEAN SEARCH REPORT
ON EUROPEAN PATENT APPLICATION NO.**

EP 15 38 2035

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2015

| Patent document cited in search report | | Publication date | Patent family member(s) | | Publication date |
|---|---|---|---|---|---|
| US 2013328725 | A1 | 12-12-2013 | NONE | | |
| US 2013190010 | A1 | 25-07-2013 | NONE | | |
| EP 2046087 | A1 | 08-04-2009 | AT | 521210 T | 15-09-2011 |
| | | | EP | 2046087 A1 | 08-04-2009 |
| | | | GB | 2454646 A | 20-05-2009 |
| US 2011156952 | A1 | 30-06-2011 | JP | 5407039 B2 | 05-02-2014 |
| | | | JP | 2011137799 A | 14-07-2011 |
| | | | US | 2011156952 A1 | 30-06-2011 |
| US 8532676 | B1 | 10-09-2013 | NONE | | |
| CN 103856989 | A | 11-06-2014 | NONE | | |
| WO 2005003809 | A1 | 13-01-2005 | AU | 2003304284 A1 | 21-01-2005 |
| | | | BR | 0318358 A | 25-07-2006 |
| | | | CA | 2527898 A1 | 13-01-2005 |
| | | | CN | 1788211 A | 14-06-2006 |
| | | | EP | 1634096 A1 | 15-03-2006 |
| | | | EP | 2905634 A1 | 12-08-2015 |
| | | | US | 2007103363 A1 | 10-05-2007 |
| | | | US | 2011128184 A1 | 02-06-2011 |
| | | | WO | 2005003809 A1 | 13-01-2005 |
| US 8412204 | B1 | 02-04-2013 | NONE | | |
| US 6999780 | B1 | 14-02-2006 | US | 6999780 B1 | 14-02-2006 |
| | | | US | 2006194588 A1 | 31-08-2006 |
| | | | US | 2010049744 A1 | 25-02-2010 |
| WO 9957575 | A2 | 11-11-1999 | AT | 369571 T | 15-08-2007 |
| | | | AT | 423329 T | 15-03-2009 |
| | | | AT | 456064 T | 15-02-2010 |
| | | | AU | 763226 B2 | 17-07-2003 |
| | | | BR | 9910229 A | 29-01-2002 |
| | | | CA | 2331709 A1 | 11-11-1999 |
| | | | CN | 1383493 A | 04-12-2002 |
| | | | CN | 1670542 A | 21-09-2005 |
| | | | CN | 1670543 A | 21-09-2005 |
| | | | DE | 69936790 T2 | 08-05-2008 |
| | | | EP | 1145035 A2 | 17-10-2001 |
| | | | EP | 1840591 A1 | 03-10-2007 |
| | | | EP | 1840592 A1 | 03-10-2007 |
| | | | EP | 2144079 A1 | 13-01-2010 |

For more details about this annex : see Official Journal of the European Patent Office, No. 12/82

EPO FORM P0459

**EP 3 054 310 A1**

## ANNEX TO THE EUROPEAN SEARCH REPORT
## ON EUROPEAN PATENT APPLICATION NO.

EP 15 38 2035

This annex lists the patent family members relating to the patent documents cited in  the above-mentioned European search report.
The members are as contained in the European Patent Office EDP file on
The European Patent Office is in no way liable for these particulars which are merely given for the purpose of information.

12-10-2015

| Patent document cited in search report | Publication date | Patent family member(s) | | Publication date |
|---|---|---|---|---|
| | | ES | 2291030 T3 | 16-02-2008 |
| | | ES | 2322104 T3 | 16-06-2009 |
| | | ES | 2338168 T3 | 04-05-2010 |
| | | HK | 1049044 A1 | 03-02-2006 |
| | | HK | 1079849 A1 | 10-07-2009 |
| | | HK | 1079850 A1 | 06-08-2010 |
| | | HK | 1140266 A1 | 01-02-2013 |
| | | IL | 139469 A | 15-12-2004 |
| | | IL | 159182 A | 17-02-2010 |
| | | JP | 4938172 B2 | 23-05-2012 |
| | | JP | 4965535 B2 | 04-07-2012 |
| | | JP | 5410303 B2 | 05-02-2014 |
| | | JP | 2002532679 A | 02-10-2002 |
| | | JP | 2009109482 A | 21-05-2009 |
| | | JP | 2010145411 A | 01-07-2010 |
| | | JP | 2012042475 A | 01-03-2012 |
| | | MX | PA00010881 A | 10-02-2003 |
| | | US | 6061018 A | 09-05-2000 |
| | | US | 6307504 B1 | 23-10-2001 |
| | | WO | 9957575 A2 | 11-11-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2154546 A2

- EP 2154546 A1